(19) Europäisches Patentamt
European Patent Office
Office européen des brevets

(11) Publication number: **0 146 104**
**A2**

# (12) EUROPEAN PATENT APPLICATION

(21) Application number: **84115115.2**

(22) Date of filing: **10.12.84**

(51) Int. Cl.⁴: **C 08 L 67/02**, C 08 K 3/00, C 08 K 5/00 // (C08L67/02, 23:08)

(30) Priority: **19.12.83 US 562672**

(43) Date of publication of application: **26.06.85 Bulletin 85/26**

(84) Designated Contracting States: **DE FR GB IT NL**

(71) Applicant: **MOBAY CHEMICAL CORPORATION, Mobay Road, Pittsburgh Pennsylvania 15205-9741 (US)**

(72) Inventor: **Kriek, George R., Box 135, R.D. 4,, Moundsville West Virginia 26041 (US)**
Inventor: **Lazear, Nelson R., 172 Fawn Valley Drive, McMurray Pennsylvania 15317 (US)**

(74) Representative: **Gremm, Joachim, Dr. et al, Bayer AG c/o Zentralbereich Patente, Marken und Lizenzen, D-5090 Leverkusen 1, Bayerwerk (DE)**

## (54) Polyester thermoplastic molding compositions with good mold release.

(57) The present disclosure is concerned with reinforced flame retarded polyethylene terephthalate molding compositions which have good mold release properties upon being injection molded because they contain low molecular weight copolymer acids which may have been neutralized with selected metal cations. If these copolymer acids are used in sufficient amount they may also act as drip suppressant agents thus allowing the compositions to reproducibly obtain a UL-94 rating at 1/32" of V-O. When used in lower amounts in combination with other drip suppressants these low molecular weight copolymer acids provide both enhanced mold release and enhanced drip suppression. These compositions contain a flame retardant package sufficient to give the base polyethylene terephthalate resin a UL-94 rating at 1/8" of V-O when tested with just the flame retardant package. These compositions are preferably reinforced with glass or other fibers. The addition to these compositions of a compound bearing at least 3 terminal epoxy groups can improve the composition's physical properties and does improve their resistance to degradation due to thermal or hydrolysis exposure. These compositions are suitable for the injection molding of a wide variety of articles of commerce.

0146104
Mo-2547
PC-117

# POLYESTER THERMOPLASTIC MOLDING COMPOSITIONS WITH GOOD MOLD RELEASE

## FIELD OF THE INVENTION

The present invention is concerned with thermoplastic polyester molding compositions which display good release from the molding tool because they contain a fairly low molecular weight copolymer acids which may carry alkali or alkaline earth carboxylate groups.

## BACKGROUND OF THE INVENTION

In recent years a number of thermoplastic polyester molding compositions have been reported in the patent literature and some of these have been offered to the marketplace. For the most part, these compositions have been based upon polyalkylene terephthalates with polyethylene terephthalate and polybutylene terephthalate being the most popular base resins. Compositions have been disclosed or offered to the market which were unfilled, reinforced with glass fibers, or mineral filled. Some of these compositions have also been flame retarded. Furthermore, the polyethylene terephthalate based compositions have been provided with additives which increase the crystallization rate of this resin.

There have been numerous attempts to prepare suitable glass reinforced molding compositions utilizing polyethylene terephthalate as the base resin. U.S. Patent 3,368,995 is concerned with the

utilization of long glass fibers to improve the resin's crystallization behavior. U.S. Patent 3,435,093 is concerned with improving the properties of the base resin by the addition of metal carboxylate bearing polyolefins in amounts between 5 and 150%. U.S. Patent 3,639,527 is concerned with the addtiion of smaller amounts of such polyolefins to improve the impact strength of the base resin. U.S. Patent 3,516,957 is concerned with improving the mold release characteristics of glass filled polyalkylene terephthalate molding compositions including polyethylene terephthalate. It achieved this end by a combination of a monomeric nucleating agent and monomeric aliphatic carboxylic acid esters such as pentaerythritol tetrasterate. Among the suitable nucleating agents are metal aliphatic carboxylates such as sodium stearate. U.S. Patent 4,223,113 teaches the use of oligomeric polyesters to enhance the crystallization behavior of polyethylene terephthalate molding compositions including glass reinforced compositions. U.S. Patent 4,254,011 is concerned with improving the flame retardance, particularly the dripping behavior of glass reinforced polyethylene terephthalate molding compositions by the addition of polyolefins bearing carboxylic acid ester groups such as methacrylate groups. U.S. Patent 4,352,904 is concerned with glass reinforced polyethylene terephthalate molding compositions containing a combination of two additional additives which caused the composition to give moldings with smooth glossy surfaces. One of these additives is a sodium or potassium or carboxylate or a polyolefin which carries such carboxylate groups. The other additive is

selected from among organic esters, organic ketones, organic sulphones, organic sulfoxides, organic nitriles and organic amides. The suitable carboxylate bearing polyolefins are described simply as "copolymers".

U.S. Patent 4,338,243 is concerned with a flame retarded version of the compositions taught in the 4,352,904 patent in which antimony trioxide is replaced by certain specified antimonate salts. This patent's working examples utilize a polyethylene wax mold release agent. U.S. Patent 4,351,757 teaches the addition of long carbon chain metal carboxylate salts as mold release agents to the compositions of the 4,352,904 patent thus creating the implication that the composition of this earlier patent by the same assignee, DuPont, had inadequate mold release properties. This implication is further supported by the use of mold release agents in the 4,338,243 patent also by the same assignee. This 4,351,757 patent makes absolutely no mention of flame retarded compositions.

U.S. Patent 4,412,040 teaches the addition of low molecular weight copolymer acids of the type with which the present invention is concerned to a wide variety of thermoplastic matrices including polyethylene terephthalate. This low molecular weight copolymer acid may be up to 100% neutralized with selected metal cations. This low molecular weight copolymer acid functions as a lubricant in these matrices to increase the output rate and decrease the screw torque in extrusion. This patent mentions neither flame retardance nor any reinforcing agent. Because of the radically different melt rheology behavior of reinforced thermoplastic compositions, there is no reason to presume that these lubricants

would have any utility in reinforced thermoplastic resin compositions. However, a commercial product believed to be among the low molecular weight copolymer acids described by this patent, AC 201 ionomer has been promoted as a dispersion aid in incorporating both fillers and flame retardants into various thermoplastics including polyesters.

## SUMMARY OF THE INVENTION

The present invention relates to glass reinforced, preferably fiber reinforced flame retarded polyethylene terephthalate molding compositions having both good mold release and a UL-94 rating at 1/16" preferably at 1/32" of VO and containing between about 0.2 and 10 wt. percent of a low molecular weight copolymer acid which contributes at least about 0.00625 weight percent carboxyl groups which are preferably at least 50 percent ionically neutralized to the blend. If the copolymer acid is added only to enhance mold release, it is preferably used in an amount between 0.2 and 1.0 wt. percent based upon the weight of the resin and it contributes between about 0.006 and 0.125 wt. % preferably at least 50 percent ionically neutralized carboxyl groups based on the weight of the resin with amounts between 0.2 and 0.5 wt. percent of additive being particularly preferred. On the other hand, if the copolymer acid is utilized primarily for its drip suppression effect, it is preferably utilized in amounts between about 1 and 4 weight percent based on the weight of the resin and it preferably contributes between about 0.031 and 0.5 wt. percent of at least 50 percent ionically neutralized carboxyl groups based on the weight of the resin with between about 2 and 4 weight percent of additive being

particularly preferred. The copolymer acid has a preferred molecular weight of less than 10,000 with molecular weights less than 5000 being particularly preferred. The pendant carboxyl groups are most preferably 100% neutralized.

DETAILED DESCRIPTION OF THE INVENTION

The resinous base of the molding composition is a polyethylene terephthalate which is primarily the condensation product of terephthalic acid and ethylene glycol. It has an inherent viscosity in excess of about 0.4 dl/g measured as a 0.5 weight percent solution in a 6:4 mixture of phenol and tetrachloroethane at 25°C. Up to about 10 mol percent of the acid component may comprise other aromatic dicarboxylic acids having from 6 to 14 carbon atoms, aliphatic dicarboxylic acids having from 4 to 8 carbon atoms or cycloaliphatic dicarboxylic acids having from 8 to 12 carbon atoms. Examples of such dicarboxylic acids which may be included with the terephthalic acid include phthalic acid, isophthalic acid, naphthlene-2, 6-dicarboxylic acid, diphenyl,4-4'-dicarboxylic acid, adipic acid, sebacic acid and cyclohexane diacetic acid. Up to about 10 mol percent of the diol component may comprise aliphatic diols having from 3 to 8 carbon atoms, cycloaliphatic diols having from 6 to 15 carbon atoms or aromatic diols having from 6 to 21 carbon atoms. Examples of such additional codiols include 3-methylpentane diol-(2,4), 2-methypentane diol-(1,4), 2,2,4-trimethylpentane diol-(1,3), 2-ethylhexane diol-(1,3), 2,2-diethylpropane diol-(1,3), hexanediol -(1,3), 1,4-di-(α -hydroxymethoxy)-benzene, 2,2-bis-(4-hydroxycyclohexyl)-propane, 2,4-dihydroxy-1,1,3,3-tetramethyl-cyclobutane, 2,2-bis-(3-α -hydroxy-

methoxyphenyl)-propane and 2,2-bis-(4-hydroxypropoxy-phenyl)-propane.

The polyethylene terephthalate utilized in the present invention can be branched by incorporating trihydric or tetrahydric alcohol or tribasic or tetrabasic acids, as decribed in German Offenlegungs-schrift 1,900,270 and in U.S. Patent 3,692,744. Examples of suitable branching agents include trimesic acid, pyromellitic acid, trimethanol propane and ethane, and pentaerythritol. It is advisable not to use more than about 1 mol percent of branching agent, based on the quantity of acid component.

Polyethylene terephthalate derived substantially only from ethylene glycol and terephthalic acid or its esters or its anhydrides is particularly preferred. Also particularly preferred are polyethylene terephthalates having inherent viscosities in excess of about 0.5 dl/g and less than about 0.8 dl/g.

The second component of the present composition is an agent recognized to have a reinforcing effect on the base resin. It is present in a reinforcingly effective amount which is generally between about 5 and 60 wt. % based on the total weight of the composition. It is preferred to use between about 15 and 50 wt. % and most preferred to use between about 20 and 45 wt. %. If the composition also contains a mineral filler such as mica, it is preferred to also use between 10 and 20 wt. % of a filamentous reinforcing agent such as glass fibers.

Any of the types of glass fibers generally known to be useful in the art of thermoplastic resins may be utilized in the compositions of the present

invention. Suitable types of glass fibers are described in British Patent 1,111,012, U.S. Patent 3,368,995 and German Auslegeschrift 2,042,447. Glass fibers produced from a variety of glasses, having a variety of fiber lengths, having a variety of fiber diameters, and in a variety of physical forms are suitable in the present invention.

Glass filaments made of calcium-aluminum-boron-silicate glass, which is relatively free from sodium carbonate, are preferably used. Glass of this type is known as "E" glass. However, where the electrical properties of the reinforced compositions are not important other glasses can also be used such as the glass with a low sodium carbonate content which is known as "C" glass. It is only important that the glass be free of any compound or functional groups which would have a substantial degradative effect upon the polyethylene terephthalate resin base of the current compositions.

The usefulness of any particular type of glass fiber does not depend on its average length. It is only necessary that the glass fibers have sufficient length to impart a reinforcing effect upon the composition. Thus it is convenient to use fiber like glass in the form of glass fiber stable with a length between about 3 and 25 mm, preferably with a length less than about 6 mm. The glass fiber length in an extrusion blended composition is likely to be considerably shorter than the glass fiber length of the starting material because of the comminution that takes place during the extrusion process. Subsequent injection molding of this composition will reduce the glass fiber length even further. It is preferred that

the glass reinforcement be selected such that the glass fiber length in final molded articles is between about 1.25 x $10^{-3}$ and 3 mm.

The diameter of the reinforcing components is not critical and may be selected from a broad range. Diameters between about 0.002 and 0.018 mm are preferred with diameters of about 0.01 mm or less being particularly preferred.

The physical form of the reinforcing material is also not critical. The individual reinforcing filaments may have been spun to give fibers and the fibers in turn may have been bundled to give yarns, ropes or hanks. Furthermore, the reinforcing material may have been incorporated in a high amount in a carrier material which makes its handling and addition to the compositions of the present invention easier. Thus, reinforcing material in the form of a "master batch" in which a very high concentration of reinforcing material has been incorporated into base resin may be suitably utilized.

Other reinforcing materials may be used instead of or in combination with the glass fibers. It is only necessary that they impart a substantial reinforcing effect to the polyethylene terephthalate resin based matrix. Such material must obviously be able to withstand the temperature and shear conditions encountered in the normal thermoplastic processing of injection molding compositions based on polyethylene terephthalate, are preferably available in a filamentous form and preferably have tensile strengths in excess of that of the matrix. Suitable fibers include those of graphite and polyaramid.

Other suitable reinforcing agents include fibers, whiskers or platelets of metals or non-metals from materials such as iron, nickel, ceramics, carbon (filaments), silicates, asbestos, silica, mica and glass. Although mica and talc have been primarily recognized by the art as mineral fillers, it has been observed that they can also enhance some of the physical properties of PET and are therefore included among the suitable reinforcing materials.

A particularly interesting embodiment comprises a combination of between about 10 and 20 wt. % of a filimentous reinforcing agent such as glass fibers; and between about 15 and 30 wt. % of a mineral filler such as mica. Such compositions display good flame resistance without an additional drip suppressant beyond a mold release amount of the copolymer acid.

The third component of the present composition is a fire retardant system. It is used in an at least sufficient amount that if it were alone incorporated into the polyethylene terephthalate, it would impart a flame retardance of at least VO at 1/8" as measured by the UL 94 test. It is preferred to use between about 3 and 20 wt. % of flame retarding agents with between 5 and 15 wt. % being particularly preferred. The flame retarding additives which can be used according to the present invention comprise a large number of chemical compounds which are well known to those skilled in the art. In general, they contain chemical elements which are used because of their flame retarding capacity, for example bromine, chlorine, antimony, phosphorus and nitrogen. Suitable flame retardants are described in U.S. Patent 4,136,089 incorporated herein by reference. Preferably the flame retarding additives

consist of halogenated organic compounds (brominated or chlorinated), optionally as a mixture with organic or inorganic antimony compounds, for example, antimony trioxide; of elementary phosphorus or phosphorus compounds or of halogen-containing compounds as a mixture with phosphorus compounds or compounds which contain phosphorus nitrogen bonds.

Halogen-containing compounds which can be used include those of the formula

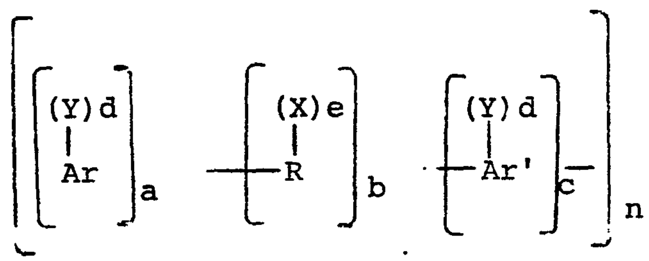

wherein

n is an integer from 1 to 10 and

R is an alkylene, alkylidene or cycloaliphatic radical with 1 to 20 C atoms, for example methylene, ethylene, propylene, isopropylene, isopropylidene, butylene, isobutylene, amylene, cyclohexylene or cyclopentylidene, and

R can also denote an oxygen atom, a carbonyl group, a sulphur atom or a sulphur-containing group, such as a sulphoxide or sulphone group, or a carbonate group or a phosphorus-containing group,

R can also consist of two or more alkylene or alkylidene groups, which are linked together by groups such as aromatic radicals, oxygen atoms, ester groups or carbonyl groups, sulphur atoms, sulphoxide groups or sulphone

groups or phosphorus-containing groupings, and finally R can also be a dihydric phenol, such as bisphenol A, or a carbonate group.

Ar and Ar' are monocarbocyclic or polycarbocyclic aromatic groups, such as phenylene, biphenylene, terphenylene, naphthylene and the like.

Y denotes organic, inorganic or organo-metallic radicals and the substituents represented by Y comprise (1) halogen, such as chlorine, bromine, iodine or fluorine, or (2) hydroxyl or ether groups of the general formula OE.

wherein

E is a monovalent hydrocarbon radical, such as, for example X or (3) monovalent hydrocarbon radicals of the type represented by R, or (4) other substituents, such as nitro or cyano, the substituents mentioned being substantially inert and a proviso being that at least 1 and preferably 2 halogen atoms are present per aryl nucleus,

X is a monovalent hydrocarbon group with 1 to 20 C atoms and the following examples may be mentioned: alkyl, such as methyl, ethyl, propyl, isopropyl, butyl and decyl; aryl, such as phenyl, naphthyl, biphenyl, xylyl and tolyl; aralkyl, such as benzyl and ethylphenyl; and cycloaliphatic groups, such as cyclopentyl and cyclohexyl and when more than one grouping X is present, these groups can be identical or different,

the letter d in the above formula represents an

integer from 1 up to the maximum number of replaceable hydrogens, which are bonded to the aromatic rings Ar or Ar',

the letter e represents 0 or an integer up to the maximum number of replaceable hydrogens on R,

the letters a, b and c represent 0 or an integer, and if b is not 0 then neither a nor c can be 0, and otherwise either a or c but not both can be 0, while if b is 0, the aromatic radicals are linked together by a direct carbon-carbon bond. The hydroxyl and Y substituents on the aromatic radicals Ar and Ar' can be in the ortho, meta- or para-position on the aromatic rings and the radicals can be linked to one another in any possible way.

The following examples of diaromatic compounds fall within the scope of the above formula: 2,2-bis-(3,5-dichlorophenyl)-propane, bis-(2-chlorophenyl)-methane, bis-(2,6-dibromophenyl)-methane, 1,1-bis-(4-iodophenyl)-ethane, 1,2-bis-(2,6-dichlorophenyl)-ethane, 1,1-bis-(2-chloro-4-iodophenyl)-ethane, 1,1-bis-(2-chloro-4-methylphenyl)-ethane, 1,1-bis-(2,5-dichlorophenyl)-ethane, 2,2-bis-(3-phenyl-4-bromophenyl)-ethane. 2,3-bis-(4,6-dichloronaphthyl)-propane, 2,2-bis-(2,6-dichlorophenyl)-pentane, 2,2-bis-(3,5-dichlorophenyl)-hexane, bis-(4-chlorophenyl)-phenylmethane, bis-(3,5-dichlorophenyl)-cyclohexylmethane, bis-(3-nitro-4-bromophenyl)-methane, bis-(4-hydroxy-2,6-dichloro-3-methoxyphenyl)-methane, 2,2-bis-(3,5-dichloro-4-hydroxyphenyl)-propane and 2,2-bis-(3-bromo-4-hydroxyphenyl)-propane.

Substituted benzenes, such as, for example, tetrabromobenzene, hexachlorobenzene and hexabromobenzene, and biphenyls, such as 2,2'-dichlorobiphenyl, 2,4'-dibromobiphenyl, 2,4'-dichlorobiphenyl, hexabromobiphenyl, octabromobiphenyl and decabromobiphenyl, and halogenated diphenyl ethers which contain 2 to 10 halogen atoms also fall within the scope of the above structured formula.

Some preferred halogen compounds within the scope of this invention are aromatic halogen compounds, such as chlorinated benzene, brominated benzene, chlorinated biphenyl, chlorinated terphenyl, brominated biphenyl, or brominated terphenyl or a compound which comprises two phenyl radicals, which are linked together by a divalent alkylene group, and carries at least two chlorine atoms or bromine atoms per phenyl nucleus.

Hexabromobenzene and brominated or chlorinated biphenyls or terphenyls, alone or as a mixture with antimony trioxide, are particularly preferred.

In general, the preferred phosphorus compounds are selected from elementary phosphorus or organic phosphonic acids, phosphonates, phosphinates, phosphonites, phosphinites, phosphene oxides, phosphenenes, phosphites or phosphates.

Triphenylphosphine oxide is an example of this category of compounds. It can be used either alone or as a mixture with hexabromobenzene or a chlorinated biphenyl and optionally antimony trioxide.

Typical preferred phosphorus compounds, which can be used within the scope of the present invention, are those of the formula

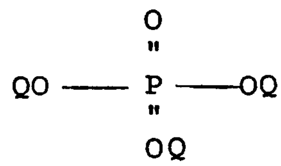

and their nitrogen analogues, wherein Q represents identical or different radicals, including hydrocarbon radicals, such as alkyl, cycloalkyl, aryl, alkylsubstituted aryl and aryl-substituted alkyl; halogen, hydrogen or combinations thereof, with the proviso that at least one of the radicals Q is an aryl radical. Typical examples of suitable phosphates comprise the following: phenyl bis-dodecyl phosphate, phenyl bis-neopentyl phosphate, phenyl ethyl hydrogen phosphate, phenyl-bis-(3,5,5'-trimethylhexyl)phosphate, ethyl diphenyl phosphate, 2-ethylhexyl di-(p-tolyl) phosphate, diphenyl hydrogen phosphate, bis-(2-ethylhexyl)-p-tolyl phosphate, tritolyl phosphate, bis-(2-ethylhexyl)-phenyl phosphate, tri-(nonylphenyl)-phosphate, phenyl methyl hydrogen phosphate, di-(dodecyl)-p-tolyl-phosphate, tricresyl phosphate, triphenyl phosphate, halogenated triphenyl phosphate, dibutyl phenyl phosphate, 2-chloroethyl diphenyl phosphate, p-tolyl bis-(2,5,5'-trimethyl-methylhexyl)-phosphate and 2-ethylhexyl diphenyl phosphate.

Preferred phosphates are those in which each radical Q is of aromatic character. The most preferred phosphate is triphenyl phosphate. Triphenyl phospate is also preferably employed in a combination with hexabromobenzene and optionally antimony trioxide.

Those compounds which contain phosphorus-nitrogen bonds, such as phosphonitrile chloride, phosphorus ester amides, phosphoric acid amides, phosphonic acid amides, phosphinic acid amides, tris-(aziridinyl)-phosphine oxide or tetrakis-(hydroxymethyl)-phosphonium chloride, can also be used as flame retarding additives.

Particularly preferred flame retarding additives are oligomers of a carbonate of a halogenated dihydric phenol. These additives are preferably used in amounts between about 5 and 15 wt. %, based on the weight of the entire composition. Of these oligomers, those which are preferred contain 2 to 20 recurrent units of the formula:

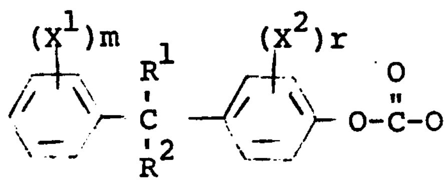

wherein

$R^1$ and $R^2$ are hydrogen, alkyl with 1 to 4 C atoms or phenyl

$X^1$ and $X^2$ are bromine or chlorine and

m and r denote an integer from 1 to 4.

These oligomeric additives have a low volatility when they are heated to temperatures above 200°C, and a softening point of less than about 300°C. They are employed alone or in combination with substances having a synergistic action such as inorganic or organic antimony compounds.

Presently, the most preferred flame retardants are halogen bearing organic compounds containing at least one imide group and having a melting point

greater than 240°C, combined with inorganic or organic antimony compounds. This class of flame retardants is preferably used at a level of between about 5 and 15 wt. %. Useful families of imide-group containing compounds include halogen bearing N,N'-arylene-diphthalimides, wherein the arylene group includes phenylene, diphenyl, naphthyl and sulphone bridged bisphenyls; tetrabrominated unsubstituted and alkyl substituted phthalimides and cyclohexyl dicarboximides; unsubstituted alkyl bridged and aryl bridged N,N'-bis-(dibromocyclohexane dicarboximides); and N,N'-alkylene bis-(tetrahalophthalimides).

Preferred imide-group containing compounds are those corresponding to the following formula:

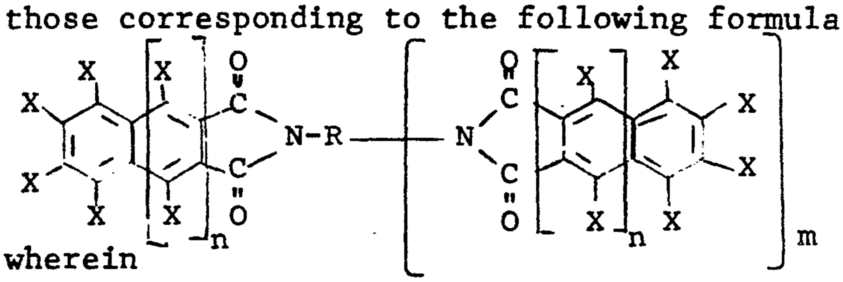

wherein

both n and m may be 1 or 0,

X may be halogen, particularly chlorine or bromine,

R is a $C_1$ to $C_6$ alkyl group, a single bond, a phenylene group, a toluene group, a cyclohexylene group, a bisphenyl methane group, a bis-cyclohexyl methane group, or a naphthylene group.

The N,N'-alkylene bis-(tetrahalophthalimdes) suitable in the present invention and a process for their production are described in U.S. Patent 4,087,441, incorporated herein by reference. The preferred N,N'-alkylenebis-(tetrahalophthalimdes) are represented by the formula:

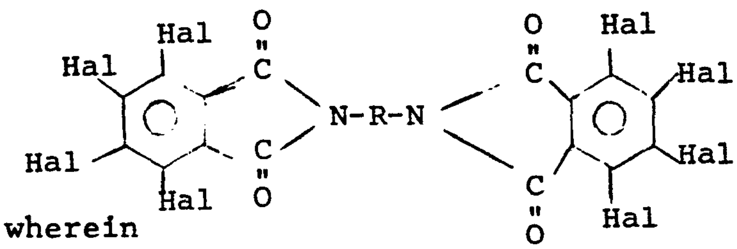

wherein

R represents a $C_1$-$C_6$ alkyl group, preferably a $C_2$-$C_6$ alkyl group, and most preferably an ethyl group, and

Hal which may be the same or different, represents a halogen atom, preferably Br or Cl, and most preferably Br.

The most particularly preferred N,N'-alkylene-bis-(tetrahalophthalimide) is N,N'-ethylenebis (tetrabromophthalimide) (R is an ethyl group and Hal is a Br atom). These types of imide-group containing components is known to enhance fire retardant properties of polyethylene terephthalate (see e.g. Japanese patent application No. 75-11904) and other polyesters (see e.g. U.S. Patent Nos. 3,624,024 and 3,873,567, and British Patent No. 1,287,934). The use of these imide-containing compounds in polyethylene terephthalate compositions containing glass fibers to make heat distortion temperatures attainable that are significantly higher than those attainable using other fire retardants is reported in U.S. Patent 4,399,244, incorporated herein by reference.

Other suitable imide-group containing compounds include1,4,5,6-tetrabromo-2,3-phthaloimide (melting point in excess of 370°C); N-methylol tetrabromo phthalimide (melting point in excess of 350°C); N,N'-bis-(1,4,5,6-tetrabromo-2,3-phthaloimide) (melting point in excess of 350°C); N,N'-

p-phenylene-di-tetrachlorophthalimide; 4,4'-di-tetrachlorophthalimido-biphenyl; N-(tetrachlorophthalimido)-tetrachlorophthalimide; N,N'-p-phenylene di-tetrabromo phthalimide, N,N'-bis-(5,6-dibromo-cyclohexane-2,3-dicarboximide); and N,N'-(1,2-ethane)-bis-(5,6-dibromocyclohexane-2,3-dicarboximide). Further suitable imide containing compounds are disclosed in U.S. Patent Nos. 3,868,388; 3,873,567; 3,915,930; 3,923,734; 4,001,179; 4,003,862; and 4,374,220.

It is preferred to use an antimony compound, particularly antimony trioxide, as a synergist with a halogen bearing flame retardant. In such cases, it is preferred to employ a ratio of flame retardant to antimony compound of between about 2 and 4. Other suitable antimony compounds are disclosed in U.S. Patent 4,338,243 incorporated herein by reference.

The fourth component of the composition is a low molecular weight copolymer acid which is preferably at least partially ionically neutralized. These salts may be obtained by partially or wholly neutralizing low molecular weight copolymer acids formed from the polymerization of an alpha-olefin and an alpha, beta-, etyhylenically unsaturated carboxylic acid with a cation formed from an element from Groups Ia, IIa and IIb, IIIa and the transition elements of the Periodic Table of Elements. Cations from Groups Ia, IIa and IIb metals are preferred. The preparation of such salts is taught in U.S. Patent 4,381,376 incorporated herein by reference. The preparation of suitable copolymer acids is taught in U.S. Patent 3,658,741, incorporated herein by reference. The suitable copolymer acids generally have a number average molecular weight between about

500 and 10,000, preferably between about 1000 and 6000, and most preferably between about 1000 and 3500. It is preferred that the copolymer acid have an acid number between about 10 and 200. Preferably at least about 15% of the carboxyl groups of the copolymer acid should be neutralized if the copolymer acid salt is to be utilized as a mold release agent with it being particularly preferred in such a case that at least about 50% of the carboxyl groups be neutralized. If the copolymer acid is also to be utilized as a drip suppressant, i.e. it is to be utilized in amounts in excess of about 1 wt. %, it is preferably at least 50% neutralized and it is particularly preferred that it be substantially completely neutralized.

The copolymer acid is polymerized from an alpha olefin and an alpha, beta ethylenically unsaturated carboxylic acid which preferably contains between 3 and 8 carbon atoms. The preferred alpha olefin is ethylene and the preferred alpha, beta ethylenically unsaturated carboxylic acids are monocarboxylic acids having between 3 and 6 carbon atoms. Suitable acids include: acrylic acid, methacrylic acid, ethacrylic acid, itacoinic acid, maleic acid, fumaric acid, and mono esters of other dicarboxlic acids such as methyl hydrogen maleate, methyl hydrogen fumaric, ethyl hydrogen fumaric, and maleic anhydride, which is considered to behave like an acid and be an acid in the present invention. Especially preferred acids are acrylic acid and methacrylic acid with acrylic acid being the most preferred acid. It is particularly preferred that the copolymer acid comprise at least 50 mol % and more preferably at least 80 mol % of ethylene.

A particularly suitable class of copolymer acids is obtained from the polymerization of ethylene with either acrylic acid or methacrylic acid to give products containing between about 1 and 20 wt. %, preferably between 3.5 and 12 wt. % acrylic or methacrylic acid residues. These particularly preferred copolymer acids have number average molecular weights between about 500 and 5000, preferably between 1500 and 4000 and have acid numbers between about 10 and 200, preferably between about 20 and 130.

The low molecular weight copolymer acids may be neutralized with cations having valences between 1 and 3 derived from metals of Groups Ia, IIa, IIb, IIIa and the transition elements. The preferred cations are derived from sodium, potassium, magnesium, calcium, barium, zinc and aluminum with the sodium, potassium, and calcium derived cations being particularly preferred. The cation can be obtained from a variety of sources including oxides, hydroxides, acetates, methoxides, oxalates, nitrates, carbonates and bicarbonates of the metals.

The copolymer acid may be neutralized before incorporation into the compositions of the present invention or it may be neutralized during the formation of the compositions of the present invention. In the latter case, a neutralizing agent which can release a suitable neutralizing cation is also incorporated into the composition of the present invention. Such neutralization must naturally take place when the composition is in a molten state such as in an extruder.

The composition may additionally contain a drip suppressant. Glass or fiber reinforced flame

retarded polyethylene terephthalate molding compositions typically require a specific agent to control the dripping behavior in order to obtain a VO rating at 1/32" in the UL-94 test. If incorporated in a sufficient amount, i.e. in excess of about 1 wt. %, the neutralized copolymer acids can serve this function in addition to their mold release function. However, it is also possible to use other drip suppressants and utilize the neutralized copolymer acids in the lower amounts required to achieve the mold release effect. A suitable class of such drip suppressants are taught in U.S. Patent 4,254,011 incorporated herein by reference. These drip suppressants are core shell polymers with a core polymerized from about 75 to 99.8 wt. % of a $C_1$-$C_6$ alkyl acrylate, 0.1 to 5 wt. % of a crosslinking monomer and 0.1 to 5 wt. % of a graft linking monomer. The crosslinking monomer is defined as a polyethylenically unsaturated monomer having a plurality of addition polymerizable reactive groups which all polymerize at substantially the same rate of reaction and the graft linking monomer is defined as a polyethylenically unsaturated monomer having a plurality of addition polymerizable reactive groups at least one of which polymerizes at a substantially different rate than the others. Onto this core is polymerized between about 5 and 75 wt. %, based on the weight of the total core shell polymer, of ethylenically unsaturated monomers which form a rigid thermoplastic shell phase. In a particularly preferred embodiment the core of this drip suppressant comprises 95 to 99.8 wt. % of n-butyl acrylate, between about 0.1 and 2.5 wt. % of butylene diacrylate crosslinking agent and between about 0.1 and 2.5 wt. % of either allyl

methacrylate or diallyl maleate graft linking agent. In this embodiment between about 5 and 40 wt. %, based on the weight of the total core shell polymer, of a shell comprising between about 60 and 100 wt. % of methyl methacrylate is polymerized onto the core. These types of drip suppressants are preferably used in amounts between about 5 and 20 wt. % based on the weight of the total composition with amounts between 5 and 10 wt. % being particularly preferred.

Other drip suppressants are known to the art and can be utilized in the compositions of the present invention. Among those which are suitable are the polytetrafluoroethylene resins whose use in this context is taught in U.S. Patent 3,671,487 incorporated herein by reference. This drip suppressant may conveniently be used in amounts between about 0.5 and 2.5 per hundred parts of base resin. Among the preferred polytetrafluoroethylenes are those having average particle sizes between 0.3 and 0.7 mm and those which form a fibrous network in the polyester matrix. Such polytetrafluoroethylenes are typically designated as ASTM D 1457 type 3 and are generally available from DuPont Company under the trade designation Teflon Type 6.

In some compositions it may not be necessary to add any recognized drip suppressants to achieve a UL 94 rating of VO at 1/32". For instance in compositions containing mineral filler and glass, this rating has been achieved without any such additive. However, the addition of a mold release amount of copolymer acid (at least partially neutralized) made the attainment of such a rating more reproducible. In particular its presence reduced or eliminated the occurrance of drips

which did not ignite the cotton placed beneath the flammability specimen in accordance with the UL test procedure.

The drip suppressant may cause a minor decrease in some of the physical properties of the composition into which it is incorporated which can be counteracted by the addition of a polyepoxy compound having more than two terminal epoxy functionalities per molecule. The addition of the core shell acrylate based polymer drip suppressant in particular causes a loss in tensile strength, flex modulus, flex strength and both notched and unnotched Izod impact strength which can be somewhat ameliorated by the addition of such a polyepoxy compound.

These polyepoxy compounds also have a dramatic effect on improving the thermal and hydrolysis stability of all the compositions of the present invention. In particular, it significantly improves the retention of physical properties including flex modulus, flex strength, tensile strength and both notched and unnotched Izod impact strength after either 4 days aging at 130°C in a dry oven or 8 hours autoclave aging in saturated steam at 121°C. The improvement is more dramatic in compositions utilizing the neutralized copolymer acid as a drip suppressant than it is in compositions utilizing the core shell acrylate based polymer suppressant because the latter compositions already have a lower level of physical properties.

The polyepoxy compounds having more than 2 terminal epoxy functionalities per molecule are more fully described in copending application Serial Number 392,846 filed June 28, 1982. They are generally defined by the formula

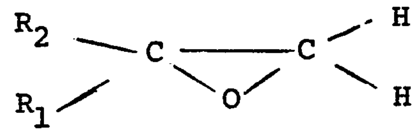

wherein

$R_1$ denotes a hydrogen atom or an alkyl radical and

$R_2$ is a polyvalent radical containing more than one additional terminal epoxide functionality.

Compounds having between 3 and 5 terminal epoxy groups are particularly preferred. It is also preferred that $R_2$ be selected from among the groups consisting of alkyl, cycloalkyl, polyalkyl, aralkyl, polyaralkyl, and aryl radicals all of which may contain ester, thioester, amine, amide, ether, thioether or ketone groups. Especially preferred polyepoxy compounds are the reaction products of chloroalkyl oxiranes with active hydrogen compounds and are defined by the following general formula

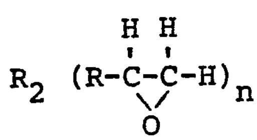

wherein

R is a $C_1$-$C_4$ alkyl

$R_2$ corresponds to the preferred definition set forth hereinabove; and

n has an integer value of between 3 and 5.

Particularly preferred polyepoxides are N,N'-(methylene di-4,1-phenylene) bis [N-(oxiranylmethyl)-oxirane-methanamine]; 1,2-ethane-diyllidenetetrakis (4,1-phenyleneoxy-methylene)-tetrakis-oxirane; tetrakis (methoxy methylene oxirane) methane; tri and tetraglycidyl pentaerthyritol; and triglycidyl isocyanurate. The polyepoxide compound is advantageously present in amounts between 0.05 and 5 wt. %, preferably between about 0.08 and 1 wt. %, and most preferably between about 0.1 and 0.8 wt. % relative to the total weight of the composition.

The compositions of the present invention may also contain antioxidants and agents to enhance the composition's resistance to hydrolysis. A particularly useful class of thermal stabilizers or antioxidants are the oxetane phosphite compounds described in U.S. Patent 4,066,617 incorporated herein by reference. A particularly useful class of hydrolysis resistance imparting agents are the diaryl carbodiimides particularly those wherein the aryl rings carry alkyl substituents. These stabilizing compounds are conveniently used at amounts between 0.015 and 0.2 wt. % based upon the weight of the resin base of the composition. The stabilizers may also conveniently include hindered phenolic compounds used in about the same amounts.

The crystallization velocity of the thermoplastic polyester molding compositions of the present invention can be increased by adding nucleating agents in quantities between about 0.01 and 1 wt. % based on the weight of the polyester. Suitable nucleating agents are disclosed in U.S. Patent 3,516,957 incorporated herein by reference. Among these nucleating agents talc is especially preferred.

The compositions of the present invention may also include other additives typically utilized in

thermoplastic molding compositions. These include colorants such as inorganic or organic pigments and dyes, agents to stabilize the composition against the effects of ultra-violet light, impact modifiers or mineral fillers. Mold release agents can also be included but their inclusion is not favored in view of the excellent mold release imparted by the required neutralized copolymer acids.

The compositions of the present invention may be prepared by any of the techniques known to the art for the preparation of thermoplastic molding compositions. A particularly preferred technique of preparation is extrusion blending. In a preferred technique, polyethylene terephthalate resin is tumble blended first with any liquid additives then with any powdered additives and finally with the reinforcing agent such as glass fibers. The polyethylene terephthalate itself is conveniently used in the form of pellets. The total tumble blended mixture may then be conveniently fed to an extruder and the extruded strands chopped to produce pellets of the composition of the present invention. It is also possible to include the reinforcing agents in the composition using a side feed extruder such as the type marketed by the Werner-Pfleiderer Corporation. Of course, it is also possible to first extrusion melt blend all the other components and subsequently re-extrude this blend to incorporate the reinforcing agent.

Thermoplastic compositions of this invention are suitable for the manufacture of all kinds of molded articles by injection molding. They are also suitable for the production of film, fibers and shapes by extrusion. However, because of their materially

superior mold release properties they are most suitable for the injection molding articles having intricate shapes.

The invention is further illustrated but is not intended to be limited by the following examples in which all parts are percentages by weight unless otherwise specified.

## WORKING EXAMPLES

### Experimental Procedure

All of the compositions which were evaluated in the working examples in Table 1 were prepared by extrusion blending on a 2" vented extruder having a 30:1 L/D barrel fitted with a 2.75:1 screw. The PET pellets were tumble blended with the other additives in powder form for two minutes and then this mixture was tumble blended with the glass fibers for an additional 30 seconds. Because the extruder is vented, the materials were fed directly to it without pre-drying. The extruder barrel zones were all set at 260° and both the gate and die were set at 245°C. The screw was run at an approximate speed of 90 rpm. The strands were fed to a belt which carried them to a water bath, through an air knife into a cutter.

A portion of the extruded pellets were molded into standard physical property and flammability specimens on a 4 oz. Newbury injection molder after drying overnight in 5 gallon cans in an oven at 95°C. The front and rear zones of the injection molder were set at 260°C while the nozzle was set at 250°C. Rapid injection, a 1/8 to 1/4" cushion and no back pressure were utilized. A ten second injection time was followed by a 12 second hold. The mold temperature was

measured as 110°C on both platens of the mold except where noted otherwise with regard to some flammability specimens.

The physical and flammability properties of the compositions were evaluated in accordance with standard ASTM and UL test methods. In particular, the following procedures were followed:

1. Flexural properties were determined in accordance with method I of ASTM D790 with a 3.2 by 12.7 mm (0.125 x 0.5") end-gated specimen, 50.7 mm (2") span length and 2 mm/min. crosshead speed.

2. Tensile properties were evaluated in accordance with ASTM method D 638 with type I end-gated specimens and a 5 mm/min. crosshead speed.

3. Impact properties were evaluated in accordance with method A of ASTM D 256 with an end-gated 3.2 mm (0.125") thick specimen.

4. Heat distortion temperature (HDT) was determined in accordance with ASTM method D 648 with an end-gated 3.2 mm (0.125") thick specimen and a fiber stress of 1.82 MPa (264 psi).

5. Flammability was determined in accordance with Underwriter Laboratories procedure UL-94 on 1/32" end-gated bars. In addition the number of flaming drips, if any, which did not ignite the cotton

placed below the specimen in accordance with the test procedure were observed and recorded. These were designated as "non-igniting drips". All of the specimens evaluated were rated as "VO" which means that they did not generate any flaming drips which did ignite the cotton beneath the specimen.

6. The moldability was evaluated in accordance with especially developed mold release test which evaluated the force necessary to release a molded part from a specially designed mold. In particular, a 3 1/2" diameter disc with 4 intersecting ribs was molded on a 15 oz. Stokes injection molding machine using a 510°F melt temperature, an injection pressure of 20,000 psi, a back pressure of 100 psi; a screw speed of 75 rpm; a cycle time of 30 seconds and a 120°C mold temperature. The ribs were designed with no drafts, i.e. their sides were perpendicular to the plane of the disc so that the width of the rib was the same at its base and at it top. The ribbed disc was released from the mold by 8 knockout pins which were attached to a common steel plate which in turn was driven by a hydraulic piston. A transducer attached to the piston recorded the force necessary to release the molded ribbed disc from the mold. The piston pressure required to achieve release with

any given composition is a relative measure of the mold release of that composition. In each case but one, at least ten measurements (moldings) were made after it was determined that a reproducible molding cycle had been established and the average value and the standard deviation were reported. In one case only, five measurements were made and only the mean value was reported.

Experimental Materials

The following materials were utilized in these working examples:

1. PET was a polyethylene terephthalate available from Eastman Kodak under the name Tenite 7741 having an inherent viscosity of 0.6 dl/g measured as a 0.5 weight % solution in a 60:40 mixture of phenol and tetrachloroethane at 25°C.

2. Glass was chopped strand glass fiber having an approximate diameter of 10 microns and a reportedly epoxy functional sizing. It was obtained from PPG Industries as 3540 Glass.

3. BT 93 was ethylene bis-(tetrabromophthalimide); available from Saytech Corporation as Saytex BT 93.

4. Epon 1031 was the reaction product of 1,1,2,2-tetra (4-hydroxyphenyl) ethane with epichlorohydrin available from Shell Chemical Company.

5. $Sb_2O_3$ was antimony trioxide.

6. The stabilizer package was a mixture of a phosphite antioxidant, an aromatic carbodiimide stabilizer and in some cases a hindered phenol. This package is not believed to have any significant effect upon either the flammability or the moldability of the compositions into which it was incorporated.

7. Neutralized 540 was a 95:5 ethylene:acrylic acid copolymer having a number average molecular weight between about 3000 and 3200 and an acid number of about 40 which was fully neutralized with sodium. The unneutralized oligomeric acid is available from Allied Corporation under the designation AC 540.

8. The 201 Ionomer was an ethylene acrylic acid copolymer which was approximately 50% neutralized with calcium. It had a number average molecular weight before calcium neutralization of approximately 3500. After neutralization it had a softening point of about 105°C, a density of 0.93 g/cc and a 140°C Brookfield viscosity of 43,000 cps. It was available from Allied Corporation under the name A-C 201.

9. KM 330 was a multiphase composite interpolymer available from Rohm & Haas under the designation Acryloid KM 330.

Its composition is described in Example 26 of U.S. Patent 4,096,202. It is believed to comprise 79.2 wt. % of n-butyl acrylate, 0.4 wt. % 1,3-butylene diacrylate; 0.4 wt. % of diallyl maleate; and 20 wt. % methyl methacrylate wherein the first three components are polymerized to form a core onto which the fourth component is grafted. The grafting efficiency is believed to be approximately 80%.

10. Free Acid 540 was the same material as was described hereinabove in point 7 before neutralization with sodium. It was extrusion blended into a PET composition in a free acid form, but is believed to have become neutralized in the extruder because calcium carbonate was included in the same composition.

11. Pigment was a combination of colorants and a titanium dioxide opacifier which comprised approximately 75 wt. % of the pigment composition. It is believed that the titanium dioxide was the only part of this composition which had any effects on the properties of the overall composition and that it was responsible for the slight reduction in properties of the composition in which it was included as compared to a similar composition which was not pigmented.

TABLE 1

| EXAMPLE NO. | 1 | 2 | 3 | 4 | 5 | 6 | 7 | 8 | A |
|---|---|---|---|---|---|---|---|---|---|
| COMPOSITION | | | | | | | | | |
| PET | balance | balance | balance | balance | balance | balance | balance | balance | balance |
| Glass | 30 | 30 | 30 | 30 | 30 | 30 | 30 | 15 | 30 |
| Epon 1031 | 0.5 | 0.5 | 0.5 | 0.5 | 0.5 | - | 1.0 | 0.5 | - |
| BT 93 | 10.5 | 10.5 | 10.5 | 10.5 | 10.5 | 10.5 | 10.5 | 9.0 | 10.5 |
| $Sb_2O_3$ | 3.5 | 3.5 | 3.5 | 3.5 | 3.5 | 3.5 | 3.5 | 3.0 | 3.5 |
| Stab. Package | 0.2 | 0.2 | 0.2 | 0.2 | 0.4 | 0.2 | 0.2 | 0.2 | 0.2 |
| Neutralized 540 | 2.5 | - | - | - | 2.5 | 2.0 | 2.0 | - | - |
| 201 Ionomer | - | - | 0.3 | 0.3 | - | - | - | 0.3 | - |
| KM 330 | - | - | 8.4 | 8.4 | - | - | - | - | 8.4 |
| Free Acid 540 | - | 1.0 | - | - | - | - | - | - | - |
| $CaCO_3$ | - | 0.5 | - | - | - | - | - | - | - |
| Pigment | - | - | 1.2 | - | - | - | - | 1.0[2] | - |
| Mica | - | - | - | - | - | - | - | 20.0 | - |
| PHYSICAL PROPERTIES | | | | | | | | | |
| 1/8" Notched Izod (J/m) | 79.3(90.2)[1] | 81.0 | 71.0 | 78.5 | 75.0 | 94.0 | 85.4 | 36.4 | 80.0 |
| 1/8" Unnotched Izod (J/m) | 912(524) | 838 | 696 | 801 | 746 | 1073 | 1014 | 404 | 833 |
| Flexural Modulus (GPa) | 10.6(10.5) | 12.8 | 9.58 | 10.5 | 10.1 | 10.5 | 11.2 | 11.4 | 9.55 |
| Flexural Strength (MPa) | 227(223) | 255 | 170 | 206 | 211 | 242 | 240 | 171 | 200 |
| Tensile Strength (MPa) | 154(138) | 170 | 112 | 132 | 146 | 156 | 155 | 116 | 130 |
| HDT at 1.82 MPa Load (°C) | 223(234) | 233 | 211 | 218 | 227 | - | - | 211 | 222 |

TABLE 1
(Continued)

| EXAMPLE No. | 1 | 2 | 3 | 4 | 5 | 6 | 7 | 8 | A |
|---|---|---|---|---|---|---|---|---|---|
| MOLD RELEASE | | | | | | | | | |
| Piston Pressure (psi) | | | | | | | | | |
| Mean Value | 50.8 | 44.5 | 50.4 | 51.7 | 41.0 | - | - | 57.8 | 158.4 |
| Standard Deviation | 2.2 | 5.7 | 2.7 | 41.3 | - | - | - | 7.7 | 25.8 |
| FLAMMABILITY (UL 94 at 1/32") | | | | | | | | | |
| Molded at 120°C | | | | | | | | | |
| As molded | | | | | | | | | |
| Rating | VO | VO | VO | VO | - | - | - | VO | VO |
| Non-Igniting Drips | 0 | 1 | 2 | 0 | - | - | - | 0 | 4 |
| Aged 7 days 70°C | | | | | | | | | |
| Rating | VO | VO | VO | - | - | - | - | - | VO |
| Non-Igniting Drips | 0 | 0 | 3 | - | - | - | - | - | 5 |
| Molded at 60°C | | | | | | | | | |
| As molded | | | | | | | | | |
| Rating | - | - | - | - | VO | - | - | - | VO |
| Non-Igniting Drips | - | - | - | - | 0 | - | - | - | 4 |
| Aged 7 days 70°C | | | | | | | | | |
| Rating | - | - | - | - | VO | - | - | - | VO |
| Non-Igniting Drips | - | - | - | - | 0 | - | - | - | 3 |

1 Retest values at a second laboratory

2 This pigment is 100% carbon black and is not believed to have had much effect on any properties other than flammability wherein it has a positive influence on dripping behavior.

The results in this Table show that in spite of its low molecular weight of about 3000 the acid copolymer is a dramatically superior drip suppressant. It achieves a suppressant effect superior to that of the KM 330 agent taught in U.S. Patent 4,254,011 with slightly more than ¼ as much agent; thus on a weight basis it appears almost 400 % more effective. Even when used in mold release amounts its effectiveness is seen in the number of non-igniting drips observed in the flammability tests. Because these drips are initially flaming only a fraction of a second stands between their extinguishing during their fall and their igniting the underlying cotton thus causing a failure to obtain a VO rating. Therefore a composition which displays such behavior, such as comparison Example A, is only marginally achieving a VO rating. Normal fluctuation in commercial production of such a composition may make it difficult to reproducibly attain a VO rating.

The ability to utilize less drip suppressant is particularly significant because high loadings may depress some of the physical properties of the composition. Thus, both Comparison A and Example 3 have lower flexural strength and tensile strength than the comparable compositions of Examples 1, 2 and 5 with the lower level of drip suppressant made possible by the use of the acid copolymer.

This Table also shows that the composition without any acid copolymer required about 300% more release force.

The Table shows that both pigmentation (Example 3) and mica filling (Example 8) reduce the physical properties. However, both compositions still

display good mold release and adequate flame retardance. The mica and carbon black are beneficial in this regard while the $TiO_2$ pigmentation is detrimental.

EXAMPLES 9 TO 14

Using materials and extrusion and molding techniques similar to those of Examples 1 through 5, compositions were prepared utilizing a less favored fiber glass, with a 13 micron diameter which was available from Owens Corning as OCF 419AA and in the case of Example 5, an only 60% sodium neutralized 540 Acid Copolymer. The following test results were obtained with the test procedures outlined for Examples 1 through 5:

TABLE 2

| EXAMPLE NO. | 9 | 10 | 11 | 12 | 13 | 14 |
| --- | --- | --- | --- | --- | --- | --- |
| COMPOSITION | | | | | | |
| PET | Balance | Balance | Balance | Balance | Balance | Balance |
| EPON 1031 | - | - | - | - | - | 1.0 |
| Glass | 30 | 30 | 30 | 15 | 30 | 30 |
| BT 93 | 10.5 | 10.5 | 10.5 | 12.75 | 10.5 | 10.5 |
| $Sb_2O_3$ | 3.5 | 3.5 | 3.5 | 4.25 | 3.5 | 3.5 |
| Stab Package | 0.2 | 0.2 | 0.2 | 0.2 | 0.2 | 0.2 |
| 60% Neut. 540 | 7.0 | - | - | - | - | - |
| Neut. 540 | - | 7.0 | 8.4 | - | 2.0 | 2.0 |
| Free Acid 540 | - | - | - | 5.1 | - | - |
| KM 330 | - | - | - | 5.1 | - | - |
| PHYSICAL PROPERTIES | | | | | | |
| 1/8" Notched Izod (J/m) | 89.0 | 94.0 | 97.7 | 48.1 | 85.3 | 85.6 |
| 1/8" Unnotched Izod (J/m) | 717/421[1] | 761/461 | 655/338 | 380 | 789 | 952 |
| Flexural Modules (GPa) | 8.18/9.2 | 8.38/9.33 | 8.45/8.86 | 5.58 | 9.8 | 10.2 |
| Flexural Strength (MPa) | 168/166 | 182/176 | 176/163 | 108 | 213 | 216 |
| Tensile Strength (MPa) | 118/119 | 123/122 | 111/111 | 74.2 | 135 | 144 |
| HDT at 1.82 MPa Load (°C) | 179.2 | 209.1 | 203.6 | 187.7 | - | - |
| FLAMMABILITY (UL 94 Rating) | | | | | | |
| As Molded 1/16" | VO | VO | VO | VO | - | - |
| As Molded 1/32" | VO | - | VO | - | - | - |

[1]Values above slash are as molded and those below the slash are after annealing at 160°C for 8 hours.

Table 2 shows that the low molecular weight acid copolymer can be used fully neutralized, partially neutralized or un-neutralized. It also shows that even higher loadings of the copolymer acid can have a detrimental effect on some physical properties (compare Examples 9 through 11 to Example 13). It additionally shows that on this type of glass the polyepoxide is effective in enhancing some as molded physical properties (compare Examples 13 and 14).

Although the invention has been described in detail in the foregoing for the purpose of illustration, it is to be understood that such detail is solely for that purpose and that variations can be made therein by those skilled in the art without departing from the spirit and scope of the invention as it may be limited by the claims.

WHAT IS CLAIMED IS:

1. A reinforced flame retarded polyethylene terephthalate injection molding composition having good mold release comprising

A) a polyethylene terephthalate type resin having an inherent viscosity of at least about 0.4 dl/g as measured in a 60:40 phenol:tetrachloroethane at 25°C and 0.5 wt. %;

B) a reinforcing amount of a reinforcing agent;

C) a flame retardant package sufficient to give the resin a UL-94 rating at 1/8" of VO when tested with the resin alone; and

D) between about 0.2 and 10 wt. %, based on the total composition, of a copolymer acid having a number average molecular weight less than 10,000 which contributes at least about 0.00625 wt. % of carboxyl groups which may be partially or fully ionically neutralized to the composition,

said composition having a UL-94 rating at 1/16" of VO.

2. The composition of Claim 1 wherein

A) the reinforcing agent is fiberous and present in an amount between about 5 and 60 wt. %;

B) the flame retardant package comprises an aromatic halogen bearing compound and an antimony compound present in an amount between about 3 and 20 wt. %; and

C) the copolymer acid has a number average molecular weight between about 500 and 5000 and an acid number between 10 and 200.

3. The composition of Claim 2 wherein the flame retardant package comprises a halogen bearing organic compound containing at least one imide group

and having a melting point above 240°C in a weight ratio with the antimony compound of between about 2:1 and 4:1.

4. The composition of Claim 3 wherein the halogen bearing compound is an N,N'-alkylene bis (tetrahalophthalimide).

5. The composition of Claim 4 wherein the phthalimide compound is N,N'-ethylene-bis-(tetrabromophthalimide) and the antimony compound is antimony trioxide.

6. The composition of Claim 1 wherein the composition has a UL-94 rating at 1/32" of VO.

7. The composition of Claim 2 wherein the fibrous agent comprises glass fibers and is present in an amount between about 15 and 50 wt. %, based on the total composition.

8. The composition of Claim 7 wherein the glass fibers have a diameter of less than about 0.018 mm and are present in an amount between about 20 and 45 wt. %.

9. The composition of Claim 1 wherein the reinforcing agent comprises a mixture of fibers and a mineral filler.

10. The composition of Claim 9 wherein the fibers are glass and the filler is mica.